Europäisches Patentamt

European Patent Office

Office européen des brevets

(11) Publication number: **0 070 099**
**B1**

(12) **EUROPEAN PATENT SPECIFICATION**

(45) Date of publication of patent specification: **04.03.87**

(21) Application number: **82303042.4**

(22) Date of filing: **11.06.82**

(51) Int. Cl.⁴: **F 16 D 13/68**

(54) **Friction clutch driven plate.**

(30) Priority: **14.07.81 GB 8121678**

(43) Date of publication of application:
**19.01.83 Bulletin 83/03**

(45) Publication of the grant of the patent:
**04.03.87 Bulletin 87/10**

(84) Designated Contracting States:
**DE FR IT**

(56) References cited:
**FR-A-2 020 215**
**FR-A-2 387 384**
**GB-A-1 597 400**
**US-A-3 809 198**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Burke, John Pius**
**27 Acacia Road**
**Leamington Spa Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to friction clutch driven plates for, but not exclusively for, use in automobile friction clutches.

In automobile clutches it is well known to provide a clutch driven plate with resilient members which act between a driven plate hub and a friction facing carrier rotatably mounted thereon to resist relative rotation therebetween. Further it is known to provide a light rate spring, or auxiliary spring, for damping out light loads caused by vibrations in the vehicle drive line when the transmission is idling and to have high rate springs for damping out torque variations in the transmission when the transmission is under a drive load. An example of this construction is shown in GB—A—1 233 273 (FR—A—2020215), in which the auxiliary vibration damping springs are arranged in a vibration member hub co-axially mounted within a main hub. The auxiliary springs act in series with the main damping springs.

It is also known from FR—A—2387384 and GB—A—1597400 to provide a clutch driven plate of the kind having a hub with a flange thereon, a co-axial friction facing carrier mounted on the hub and capable of limited angular rotation about the hub, and circumferentially acting main resilient members each located in a respective set of aligned apertures in the carrier and flange to resist said rotation, said resilient members each being a snug fit in its respective aperture in one of the hub and carrier, and having circumferential play in its respective aperture in the other of the hub and carrier, a circumferentially acting auxiliary resilient member being arranged in series with one of the aforesaid main resilient members, its other end acting against the said other of the hub and carrier to bias said main resilient member towards one radial end of its respective aperture in which it has circumferential play.

In these known driven plates the auxiliary spring is arranged within the main spring so the main spring has to be of relatively large diameter, tending to increase the axial space required for the driven plate to an undesirable extent. An objective of the invention is to overcome this disadvantage.

In accordance with the present invention a clutch driven plate of the kind referred to above is characterised in that said auxiliary resilient member is arranged physically end to end with its associated main resilient member.

Preferably the auxiliary resilient member operates only during the drive mode of operation of the driven plate and not during the overdrive mode of operation.

By drive mode of operation is meant when a torque load is transferred from a vehicle engine to a transmission and by overdrive mode is meant when the torque load is transferred from the transmission to the engine for example when using the engine as a brake for the vehicle.

Whilst the resilient member could be springs or rubber bushes, conveniently the aforesaid resilient members are elastomeric, and the auxiliary resilient member is a compression type coil spring.

The invention will now be described by way of example and with reference to the following drawings in which:—

Fig. 1 is an elevation of a driven plate according to this invention showing one sector of the plate in section;

Fig. 2 is a section on the line II—II of Fig. 1;

Fig. 3 is a section on the line III—III of Fig. 1;

Fig. 4 is a section on the IV—IV of Fig. 1;

Fig. 5 is a graph of torque versus deflection for the herein disclosed driven plate;

Fig. 6 is an elevation of an alternative construction of driven plate with the retainer plate removed;

Fig. 7 is a section on the line VII—VII of Fig. 6; and

Fig. 8 is a section on the line VIII—VIII of Fig. 6.

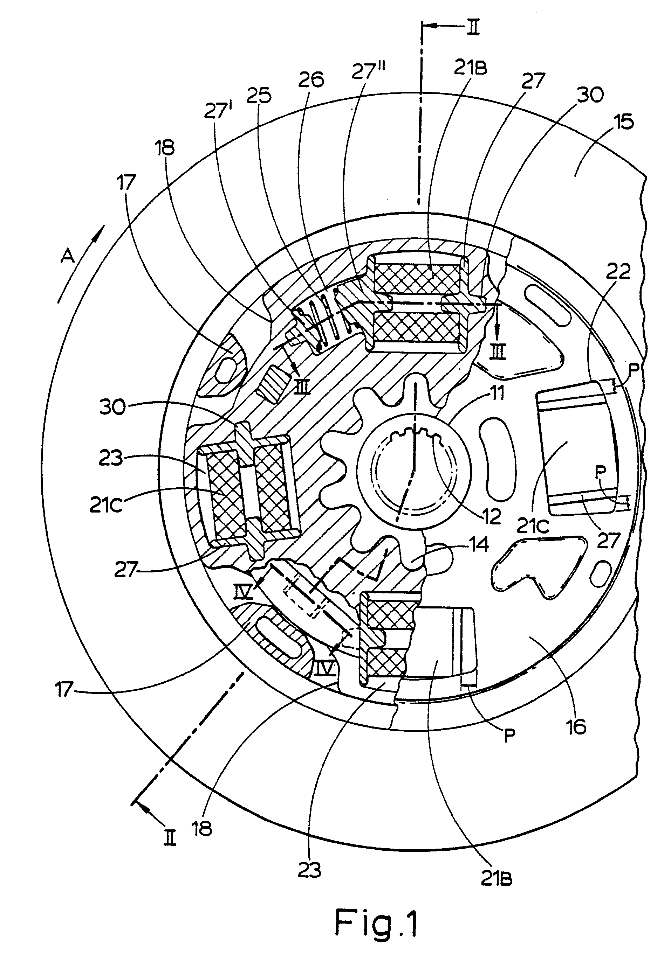

With reference to Figs. 1 to 4, a friction clutch driven plate for an automobile friction clutch comprises a steel hub 11 having internal splines 12 for mating with the input shaft of a gearbox. The hub 11 has a glass-filled nylon 66 annular flange 13 moulded thereon. The flange 13 secured in position by projections 14 on the external surface of the hub 11.

A pair of co-axial friction facings 15 are bonded onto a reinforced polyether sulphone (P.E.S.) adaptor plate 16.

The adaptor plate 16 is injection moulded and is reinforced by glass fibre, carbon fibre or combinations of both. The adaptor plate 16 is co-axial with the hub 11 and is rotatably mounted on the hub 11 on one side of the flange 13. There are four circumferentially spaced axial projections 17 on the plate 16 which pass through apertures 18 in the outer peripheral margin of the flange 13. A co-axial annular retainer plate 19 is located on the other side of the flange 13 to the adaptor plate 16, and is secured rotationally fast to the adaptor plate 16 by bonding or welding to the projections 17. The retainer plate 19 is moulded from reinforced P.E.S. The adaptor and retainer plates 16 and 19 form a friction facing carrier that is capable of limited angular rotation relative to the hub 11, the rotation being limited by abutment of the projections 17 with the radial ends of the co-operating apertures 18.

The main drive damping means are provided by four elastomeric resilient members 21 which are each located in a respective set of aligned apertures 22 and 23 in the facing carrier plates 16 and 19 and hub flange 13 respectively. The elastomeric members 21 are hollow rubber cylinders, preferably styrene butadiene rubber, which are a snug fit in the flange apertures 23 but have circumferential play in the facing carrier apertures 22. Two diametrically opposed elastomeric members· 'C' have circumferential play in their respective carrier apertures 22 at both ends thereof, whereas the two other elastomeric members 'B' have circumferential play at the trailing end only of their respective apertures 22 that is, the trailing end with respect to the direction of rotation of the carrier about the hub during the drive mode by operation of the plate. The circumferential play 'P' at both ends of the member 'C' is substantially equal, and is also substantially equal to that at the trailing ends of the members 'B'.

Each of two elastomeric members 'B' is in end-to-end contact with an auxiliary spring 25. Each auxiliary spring 25 is housed within the adaptor and retainer plates 16 and 19 and an aperture 26 in the hub flange 13. The ends of the auxiliary springs 25, and the elastomeric members 21 are each supported by an end cap 27 each of which has a boss 30 that locates in the hub flange 13. End caps 27″ are located between each pair of adjacent ends of an auxiliary spring 25 and its adjacent elastomeric member 21 prevent direct contact therebetween and also serve to locate both. The face of the end cap 27″ against which the spring 25 abuts is angled to provide a substantially flat surface for the auxiliary spring to abut against, and the spring 25 is located to act co-axially onto the adjacent elastomeric member 21. An end cap 27′ at the other end of each auxiliary spring 25 abuts against both the hub flange 13 and internal shoulders 29 on the facing carrier plates 16 and 19.

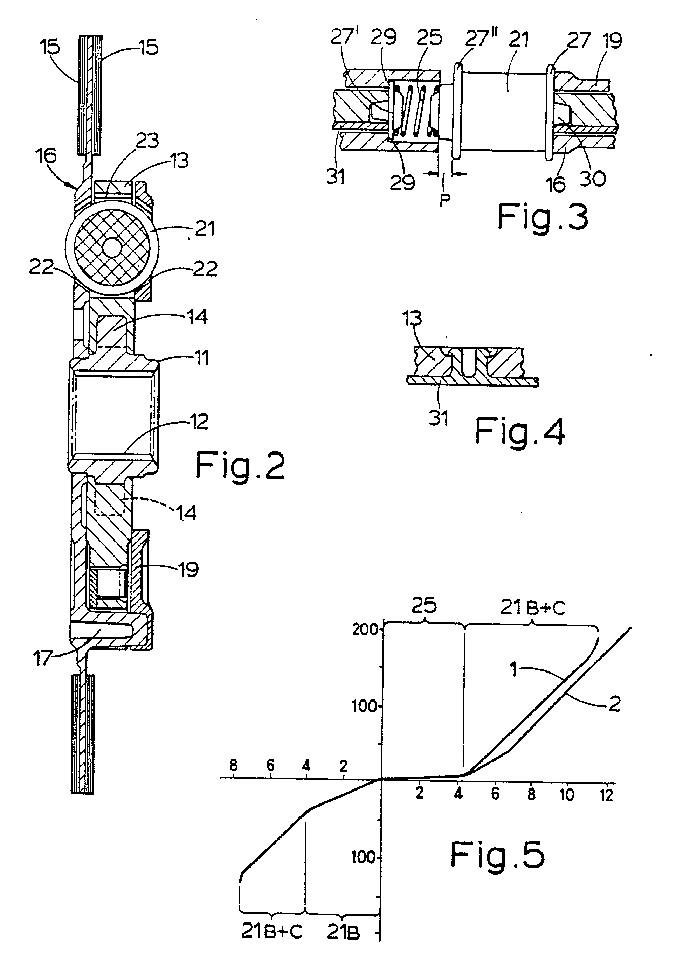

Each auxiliary spring 25 is located at the trailing end of its respective elastomeric member 21 and biases the adjacent elastomeric members 21 against which it reacts against the leading radial end of its co-operating carrier aperture 22, so that to maintain the play 'P' between the trailing radial end of said aperture and the respective end cap 27″ (Fig. 3). The end caps 27′ locate in cut outs in the hub flange and are held in position by retaining pads 31 which clip into the flange (Fig. 4).

With the hub 11 held steady and the friction facings rotated, the driven plate operates in the following manner, with reference also to Curve 1 of Fig. 5:—

(a) When the friction facing carrier operates in the drive mode the facing carrier rotates clockwise in the direction of Arrow A and the initial resistance to rotation is provided by the auxiliary springs 25. After carrier plates 16 and 19 have moved to take up the clearance 'P' on the resilient members 'B' and 'C', the plates 16 and 19 then abut the end caps 27 of the said members.

(b) Further clockwise rotational movement results in all the resilient members 21 resisting the rotation. This continues until the clockwise movement is limited by the projections 17 abutting the ends of the apertures 18.

(c) If the friction facings are now rotated anticlockwise the reverse operation takes place until the facing carrier plates pass through the original position.

(d) When the driven plate goes into the overdrive mode, then because there is no clearance on the one end of the resilient members 'B', and the auxiliary springs 25 are shorted out, because the cap 27″ is held on the hub flange 13, then the members 'B' come into immediate operation, and the members 'C' come into operation after the circumferential play 'P' has been taken up.

Whilst the driven plate has been described as having elastomeric resilient members, these could be replaced by conventional coil springs.

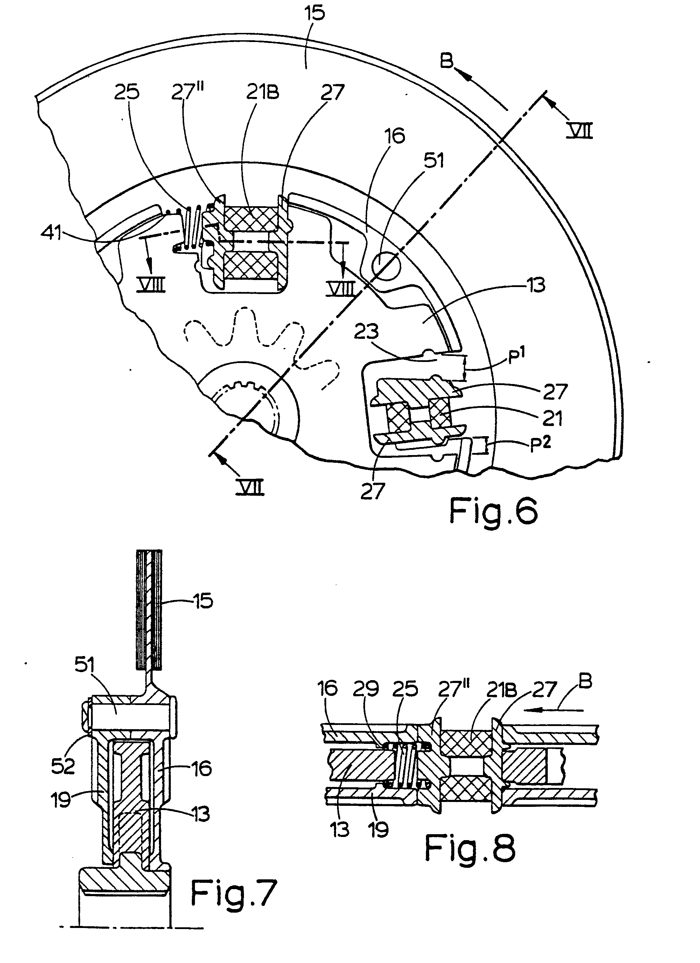

A modified driven plate is illustrated in Figs. 6 to 8, and only the differences compared with the previously described driven plates will be described. Those components which are similar to those in the previously described driven plate will be given the same reference numerals.

In the embodiment shown in Figs. 6 to 8, the elastomeric members 21 are arranged to be a snug fit in the spring apertures in the adaptor and retainer plates 16 and 19, and to have circumferential play in their respective apertures 23 in the hub flange 13. The elastomeric members 21 again have end caps 27 located one at each end thereof. In this case different circumferential clearances P1 and P2 are arranged between the ends of a spring and the adjacent edges of the aperture 23 in which the spring is housed. This will allow the shape of the load deflection curve to be altered as desired for example from Curve 1 to Curve 2 in Fig. 5.

Also the adaptor plate 16 and retainer plate 19 are now held together by rivets 51 and clips 52.

In the construction of the plate, shown, the drive mode of the plate is when the carrier is rotated anticlockwise with respect to the hub 11 i.e. in the direction of Arrow B and the auxiliary springs 25 are each located at the leading end of one of the elastomeric members during the drive mode operation of the driven plate. Each auxiliary spring 25 acts at one end directly against internal shoulders 29 on the corner and a shoulder 41 on the hub flange and at the other end against a cap 27″ on the adjacent resilient member 21. In this construction the auxiliary spring 25 no longer cuts co-axially against the adjacent elastomeric member 21 but is offset radially outwardly.

During operation of the driven plate in the drive mode of operation the auxiliary spring compressed by relative movement between the plates 16 and 19, and the hub flange 13, until the end cap 27″ abuts the flange, and in the overdrive mode of operation, the auxiliary spring is shorted out because the plates 16 and 19 operate directly against the end cap 27″.

**Claims**

1. A clutch driven plate having a hub (11) with a flange (13) thereon, a co-axial friction facing carrier (16 and 19) mounted on the hub (11) and capable of limited angular rotation about the hub, and circumferentially acting main resilient members (21) each located in a respective set of aligned apertures (22 and 23) in the carrier (16 and 19) and flange (13) to resist said rotation, said resilient members each being a snug fit in its respective aperture (22 or 23) in one of the hub and carrier, and having circumferential play (P) in its respective aperture (22 or 23) in the other of the hub and carrier, a circumferentially acting auxiliary resilient member (25) being arranged in series with one of the aforesaid main resilient members (21B), its other end acting against the said other of the hub (11) and carrier (16 and 19) to bias said main resilient member (21B) towards one radial end of its respective aperture (22 or 23) in which it has circumferential play, characterised in that said auxiliary resilient member (25) is arranged physically end to end with its associated main resilient member (21B).

2. A driven plate as claimed in Claim 1, characterised in that the auxiliary resilient member (25) is arranged to act only in one direction of rotation of the facing carrier (16 and 19) about the hub (11).

3. A driven plate as claimed in Claim 2, characterised in that two of the aforesaid main resilient members (21B) are each arranged end to end with an auxiliary resilient member (25).

4. A driven plate as claimed in any one of Claims 1 to 3, characterised in that the aforesaid main resilient members (21) are elastomeric, and the auxiliary resilient member (25) is a compression type coil spring.

5. A driven plate as claimed in any one of Claims 1 to 4, characterised in that an end cap (27″) is located between the auxiliary member (25) and one of the aforesaid main members (21B) so that said members (21B and 25) do not directly act against each other, said end cap (27″) providing support and location for adjacent ends of said members.

6. A driven plate as claimed in Claim 1, in which the facing carrier comprises an adaptor plate (16) which carries the friction facings (15) and is located on one side of an annular flange (13) on the hub member (11), and a retainer plate (19) located on the other side of the flange (13) and secured to the adaptor plate (16), characterised in that the auxiliary resilient member (25) is located within the two plates (16 and 19).

7. A driven plate as claimed in Claim 2, and any one of Claims 3 to 5, when dependant upon Claim 2, characterised in that the auxiliary resilient member (25) operates only in the drive mode of operation of the driven plate and not in the overdrive mode.

8. A driven plate as claimed in Claim 7, when dependant upon Claim 5, characterised in that the auxiliary resilient member (25) is shorted out in the overdrive mode of operation by abutment of the end cap (27″) with one of the hub (11) or carrier (16 and 19) so as to bridge the auxiliary member (25).

**Revendications**

1. Disque d'embrayage comprenant un moyeu (11) sur lequel est situé un flasque (13), un support de garnitures de friction (16 et 19) qui est monté de façon coaxiale sur ce moyeu (11) et est susceptible d'une rotation angulaire limitée autour de celui-ci, et des organes élastiques principaux (21) qui agissent dans le sens circonférenciel et dont chacun est disposé dans un jeu respectif d'ouvertures alignées (22 et 23) ménagées dans le support (16 et 19) et le flasque (13) de façon à résister à ladite rotation, ces organes élastiques présentant chacun un ajustement à frottement doux dans son ouverture associée (22 ou 23) située dans l'un des deux éléments constitués par le moyeu et le support, et présentant un jeu circonférenciel (P) dans son ouverture associée (22 ou 23) située dans l'autre de ces deux éléments constitués par le moyeu et le support, un organe élastique auxiliaire (25) qui agit dans le sens circonférenciel étant disposé en série avec l'un des organes élastiques principaux (21B) précités, son autre extrémité agissant contre l'autre des deux éléments constitués par le moyeu (11) et le support (16 et 19) de façon à repousser cet organe élastique principal (21B) vers d'une extrémité radiale de son ouverture associée (22 ou 23) dans laquelle il présente un jeu circonférenciel, caractérisé en ce que ledit organe élastique auxiliaire (25) est disposé sur le plan matériel, bout à bout avec à son organe élastique principal associé (21B).

2. Disque d'embrayage tel que revendiqué dans la revendication 1, caractérisé en ce que l'organe élastique auxiliaire (25) est disposé de façon à n'agir que suivant l'une des directions de rotation du support de garnitures (16 et 19) autour du moyeu (11).

3. Disque d'embrayage tel que revendiqué dans la revendication 2, caractérisé en ce que deux des organes élastiques principaux (21B) précités sont disposés chacun bout à bout avec un organe élastique auxiliaire (25).

4. Disque d'embrayage tel que revendiqué dans l'une quelconque des revendications 1 à 3, caractérisé en ce que les organes élastiques principaux (21) précités sont en élastomère et en ce que l'organe élastique auxiliaire (25) est une ressort hélicoïdal du type travaillant à la compression.

5. Disque d'embrayage tel que revendiqué dans l'une quelconque des revendications 1 à 4, caractérisé en ce qu'un chapeau d'extrémité (27″) est disposé entre l'organe auxiliaire (25) et l'un des organes principaux (21B) précité, de sorte que lesdits organes (21B et 25) n'agissent pas directement l'un contre l'autre, ce chapeau d'extrémité (27″) fournissant un support et un positionnement aux extrémités adjacentes desdits organes.

6. Disque d'embrayage tel que revendiqué dans la revendication 1, dans lequel le support de garnitures comprend une plaque d'adaptation (16) qui porte les garnitures de friction (15) et est située sur l'un des côtés d'un flasque annulaire (13) monté sur la pièce de moyeu (11), et une plaque de maintien (19) qui est disposée sur l'autre côté du flasque (13) et est fixée sur la plaque d'adaptation (16), caractérisé en ce que l'organe élastique auxiliaire (25) est disposé à l'intérieur des deux plaques (16 et 19).

7. Disque d'embrayage tel que revendiqué dans la revendication 2 et dans l'une quelconques des revendications 3 à 5 lorsqu'elles dépendent de cette revendication 2, caractérisé en ce que l'organe élastique auxiliaire (25) ne fonctionne que dans le mode normal de fonctionnement du disque d'embrayage, et non pas dans le mode du type frein-moteur.

8. Disque d'embrayage tel que revendiqué dans la revendication 7 lorsqu'elle dépend de la revendication 5, caractérisé en ce que l'organe élastique auxiliaire (25) est mis hors d'action dans le mode de fonctionnement frein-moteur, du fait de la venue en butée du chapeau d'extrémité (27") avec l'une des pièces constituées par le moyeu (11) et le support (16 et 19), de manière à faire pont par-dessus cet organe auxiliaire (25).

**Patentansprüche**

1. Angetriebene Kupplungsscheibe, die eine Nabe (11) mit einem Flansch (13) daran, einen koaxialen Reibungsbelagträger (16 und 19), der auf der Nabe (11) angeordnet ist und sich begrenzt um die Nabe drehen kann, und in Umfangsrichtung wirkende Hauptfederteile (21) hat, von denen jedes in einer jeweiligen Gruppe von ausgerichteten Öffnungen (22 und 23) in dem Träger (16 und 19) und dem Flansch (13) angeordnet ist, um der Drehung entgegenzuwirken, wobei jedes der Federteile einen Paßsitz in seiner jeweiligen Öffnung (22 oder 23) in einem der aus der Nabe und dem Träger bestehenden Teile hat und Spiel (P) in Umfangsrichtung in seiner jeweiligen Öffnung (22 oder 23) in dem anderen der aus der Nabe und dem Träger bestehenden Teile hat, wobei ein in Umfangsrichtung wirkendes zusätzliches Federteil (25) in Reihe mit einem der vorgenannten Hauptfederteile (21B) angeordnet ist, wobei sein anderes Ende gegen den anderen der aus der Nabe (11) und dem Träger (16 und 19) bestehenden Teile wirkt, um das Hauptfederteil (21B) gegen ein radiales Ende seiner jeweiligen Öffnung (22 oder 23) vorzuspannen, in welcher es Spiel in Umfangsrichtung hat, dadurch gekennzeichnet, daß das zusätzliche Federteil (25) körperlich Ende an Ende mit seinem zugehörigen Haupfederteil (21B) angeordnet ist.

2. Angetriebene Scheibe nach Anspruch 1, dadurch gekennzeichnet, daß das zusätzliche Federteil (25) so angeordnet ist, daß es nur in eine Richtung der Drehung des Belagträgers (16 und 19) um die Nabe (11) wirkt.

3. Angetriebene Platte nach Anspruch 2, dadurch gekennzeichnet, daß ein jedes von zwei der vorgenannten Hauptfederteilen (21B) Ende an Ende mit einem zusätzlichen Federteil (25) angeordnet ist.

4. Angetriebene Scheibe nach irgendeinem der Ansprüche 1 bis 3, dadurch gekennzeichnet, daß die vorgenannten Hauptfederteile (21) aus einem Elastomer sind und das zusätzliche Federteil (25) eine Schraubendruckfeder ist.

5. Angetriebene Scheibe nach irgendeinem der Ansprüche 1 bis 4, dadurch gekennzeichnet, daß eine Endkappe (27") zwischen dem zusätzlichen Teil (25) und einem der vorgenannten Hauptteile (21B) angeordnet ist, so daß die Teile (21B und 25) nicht direkt gegeneinander wirken, wobei die Endkappe (27") eine Abstützung und Festlegung für benachbarte Enden der Teile schafft.

6. Angetriebene Scheibe nach Anspruch 1, bei welcher der Belagträger eine Zwischenscheibe (16), welche die Reibungsbeläge (15) trägt und auf einer Seite eines an dem Nabenteil (11) vorgesehenen Ringflansches (13) angeordnet ist, und eine Haltescheibe (19) aufweist, die auf der anderen Seite des Flansches (13) angeordnet und an der Zwischenscheibe (16) befestigt ist, dadurch gekennzeichnet, daß das zusätzliche Federteil (25) innerhalb der beiden Platten (16 und 19) angeordnet ist.

7. Angetriebene Scheibe mach Anspruch 2 und irgendeinem der Ansprüche 3 bis 5, wenn rückbezogen auf Anspruch 2, dadurch gekennzeichnet, daß das zusätzliche Federteil (25) nur im Treibbetrieb der angetriebenen Scheibe und nicht im Schubbetrieb arbeitet.

8. Angetriebene Scheibe nach Anspruch 7, wenn rückbezogen auf Anspruch 5, dadurch gekennzeichnet, daß das zusätzliche Federteil (25) im Schubbetrieb durch die Anlage der Endkappe (27") an einem der aus der Nabe (11) und dem Träger (16 und 19) bestehenden Teile umgangen wird, um das zusätzliche Teil (25) zu überbrücken.

Fig.1

1

0 070 099

Fig.2

Fig.3

Fig.4

Fig.5

2

**Fig.6**

**Fig.7**

**Fig.8**